# EUROPEAN PATENT APPLICATION

(11) **EP 4 332 167 A1**
(43) Date of publication of application: **06.03.2024**
(21) Application number: 22796083.8
(22) Date of filing: 26.04.2022
(51) Int. Cl.: C08L 77/02, C08L 27/18, C08K 5/00, C08K 5/5313, C08K 5/529, C08K 5/3492, C08K 3/38

(54) **THERMOPLASTIC RESIN COMPOSITION AND MOLDED PRODUCT USING SAME**

(30) Priority: 30.04.2021 KR 20210056912
(71) Applicant: Lotte Chemical Corporation, Seoul, 05551 (KR)
(72) Inventor: LEE, Hyunje, Uiwang-si, Gyeonggi-do 16073 (KR); KANG, Seongwoo, Uiwang-si, Gyeonggi-do 16073 (KR)
(74) Representative: Germain Maureau
(86) International application number: PCT/KR2022/005897
(87) International publication number: WO 2022/231250

(57) **Abstract**

Provided are a thermoplastic resin composition with excellent flame retardancy, electrical insulation and mechanical properties, and a molded product using same, the composition comprising, on the basis of 100 parts by weight of a base material comprising (A) 30-70 wt% of a polyamide resin, (B) 5-30 wt% of a phosphorus-based flame retardant, (C) 1-10 wt% of a melamine-based flame retardant and (D) 20-40 wt% of glass fiber: (E) 0.5-5 parts by weight of zinc borate; and (F) 0.5-3 parts by weight of a fluorinated polyolefin, wherein the weight ratio of the zinc borate (E) and the fluorinated polyolefin (F) is 1:2 to 1:10.

## Description

### [Technical Field]

The present invention relates to a thermoplastic resin composition and a molded product formed of the same.

### [Background Art]

Thermoplastic resin compositions for automotive parts or electrical appliances have industrial standards for flame retardancy and are required to have good properties in terms of electrical insulation and flame retardancy. In recent years, many governments have supported the spread of electric vehicles due to environmental issues, causing an increase in demand for electric vehicle batteries. As the stability of electric-vehicle batteries becomes an issue, flame retardancy and electrical insulation of a thin film obtained from a thermoplastic resin composition are important not only for general electrical appliances but also for electric-vehicle battery applications. In addition, in order to be used for automotive parts or electrical appliances, thermoplastic resin compositions need to meet requirements for the above properties without sacrificing mechanical properties, such as tensile strength and flexural modulus.

Polyamide resins are useful as thermoplastic resin compositions for automotive parts or electrical appliances due to good heat resistance and moldability thereof. However, since the polyamide resins lack flame resistance, a flame retardant is added thereto in order to meet the flame retardancy required for specific applications. Although a halogen compound and an antimony compound may be used as the flame retardant, a polyamide resin composition including the antimony compound and the halogen compound (especially, a bromine compound) can be limited in application thereof since the bromine compound can cause environmental problems in the case of burning the composition.

Accordingly, non-halogen flame retardants, such as phosphorus flame retardants, are used to improve flame retardancy of the polyamide resin composition. However, since a flame retardant added to the polyamide resin composition deteriorates heat resistance and impact resistance thereof, an impact modifier is added thereto to improve impact resistance, thereby causing deterioration in flame retardancy. Moreover, additives for improvement in electrical insulation can cause deterioration in other properties despite improvement in electrical properties.

Therefore, there is a need for a halogen-free flame retardant polyamide resin composition that exhibits good properties in terms of flame retardancy and electrical insulation while having good mechanical properties.

### [Disclosure]

### [Technical Problem]

It is an aspect of the present invention to provide a thermoplastic resin composition having good flame retardancy, electrical insulation and mechanical properties, and a molded product formed of the same.

### [Technical Solution]

In accordance with one aspect of the present invention, there is provided a thermoplastic resin composition including: 100 parts by weight of a base material including 30 wt% to 70 wt% of a polyamide resin (A), 5 wt% to 30 wt% of a phosphorus flame retardant (B), 1 wt% to 10 wt% of a melamine flame retardant (C), and 20 wt% to 40 wt% of glass fibers (D); 0.5 parts by weight to 5 parts by weight of zinc borate (E); and 0.5 parts by weight to 3 parts by weight of fluorinated polyolefin (F), wherein a weight ratio of the zinc borate (E) to the fluorinated polyolefin (F) ranges from 1:2 to 1:10.

The polyamide resin (A) may include polyamide 6, polyamide 66, polyamide 46, polyamide 11, polyamide 12, polyamide 610, polyamide 612, polyamide 6I, polyamide 6T, polyamide 4T, polyamide 410, polyamide 510, polyamide 1010, polyamide 1012, polyamide 10T, polyamide 1212, polyamide 12T, polyamide MXD6, or a combination thereof.

The polyamide resin (A) may be polyamide 6.

The phosphorus flame retardant (B) may be one of aluminum diethyl phosphinate, triphenyl phosphate, ammonium polyphosphate, resorcinol-di(bis-2,6-dimethylphenyl)phosphate, bisphenol A diphenyl phosphate, cyclophosphazene, diethyl phosphinate ammonium salt, or a combination thereof.

The phosphorus flame retardant (B) may be aluminum diethyl phosphinate.

The melamine flame retardant (C) may be one of melamine polyphosphate, melamine/ammonium polyphosphate, melamine phosphate, melamine pyrophosphate, or a combination thereof.

The melamine flame retardant (C) may be melamine polyphosphate.

The fluorinated polyolefin (F) may be one of a polytetrafluoroethylene resin, a polyfluoroethylene resin, a polyfluoropropylene resin, a polyfluorobutylene resin, a polyvinylidene fluoride resin, a tetrafluoroethylene-vinylidene fluoride copolymer, a tetrafluoroethylene-hexafluoropropylene copolymer, an ethylene-tetrafluoroethylene copolymer, or a combination thereof.

The fluorinated polyolefin (F) may be a polytetrafluoroethylene resin.

A weight ratio of the zinc borate (E) to the fluorinated polyolefin (F) may range from 1:3 to 1:6.

The thermoplastic resin composition may further include at least one additive selected from among an antimicrobial agent, a nucleating agent, a coupling agent, fillers, a plasticizer, a lubricant, a release agent, a heat stabilizer, an antioxidant, an UV stabilizer, a pigment, and a dye.

In accordance with another aspect of the present invention, there is provided a molded product formed of the thermoplastic resin composition set forth above.

The molded product may have a comparative tracking index (CTI) of at least 650 V, as measured in accordance with ASTM D3638.

The molded product may have a flame retardancy of at least V-0, as measured in accordance with UL94.

The molded product may have a tensile elongation at break of at least 3.0%, as measured in accordance with ASTM D638.

The molded product may have a flexural modulus of at least 105,000 kgf/cm², as measured in accordance with ASTM D790.

### [Advantageous Effects]

The present invention provides a thermoplastic resin composition having good flame retardancy, electrical insulation and mechanical properties, and a molded product formed of the same.

### [Mode for Invention]

Hereinafter, embodiments of the present invention will be described in detail. However, it should be understood that these embodiments are provided for illustration only and are not to be construed in any way as limiting the present invention. Therefore, the present invention should be defined only by the accompanying claims and equivalents thereto.

As used herein, "copolymerization" refers to block copolymerization, random copolymerization and graft copolymerization, and "copolymer" refers to a block copolymer, a random copolymer, and a graft copolymer unless otherwise noted,

A thermoplastic resin composition according to the present invention includes: 100 parts by weight of a base material including 30 wt% to 70 wt% of a polyamide resin (A), 5 wt% to 30 wt% of a phosphorus flame retardant (B), 1 wt% to 10 wt% of a melamine flame retardant (C), and 20 wt% to 40 wt% of glass fibers (GFs) (D); 0.5 parts by weight to 5 parts by weight of zinc borate (ZnB) (E); and 0.5 parts by weight to 3 parts by weight of fluorinated polyolefin (F), wherein a weight ratio of the zinc borate (E) to the fluorinated polyolefin (F) ranges from 1:2 to 1:10.

Now, each component of the thermoplastic resin composition will be described in detail.

### (A) Polyamide resin

In one embodiment, the polyamide resin allows the thermoplastic resin composition to have good mechanical properties.

In one embodiment, the polyamide resin may include various polyamide resins known in the art, for example, an aromatic polyamide resin, an aliphatic polyamide resin, or a mixture thereof, without being limited thereto.

The aromatic polyamide resin is a polyamide resin containing an aromatic group in a main chain thereof, and may include a wholly aromatic polyamide resin, a semi-aromatic polyamide resin, or a mixture thereof.

The wholly aromatic polyamide resin refers to a polymer of an aromatic diamine and an aromatic dicarboxylic acid, and the semi-aromatic polyamide resin refers to a polyamide resin containing both at least one aromatic unit and at least one non-aromatic unit between amide bonds. For example, the semi-aromatic polyamide resin may be a polymer of an aromatic diamine and an aliphatic dicarboxylic acid, or may be a polymer of an aliphatic diamine and an aromatic dicarboxylic acid.

The aliphatic polyamide resin refers to a polymer of an aliphatic diamine and an aliphatic dicarboxylic acid.

The aromatic diamine may include, for example, p-xylene diamine, m-xylene diamine, and the like, without being limited thereto. These may be used alone or as a mixture thereof.

The aromatic dicarboxylic acid may include, for example, phthalic acid, isophthalic acid, terephthalic acid, 2,6-naphthalenedicarboxylic acid, (1,3-phenylenedioxy)diacetic acid, and the like, without being limited thereto. These may be used alone or as a mixture thereof.

The aliphatic diamine may include, for example, ethylenediamine, trimethylenediamine, hexamethylenediamine, dodecamethylenediamine, piperazine, and the like, without being limited thereto. These may be used alone or as a mixture thereof.

The aliphatic dicarboxylic acid may include, for example, adipic acid, sebacic acid, succinic acid, glutaric acid, azelaic acid, dodecanedioic acid, dimeric acid, cyclohexanedicarboxylic acid, and the like, without being limited thereto. These may be used alone or as a mixture thereof.

In one embodiment, the polyamide resin may include polyamide 6, polyamide 66, polyamide 46, polyamide 11, polyamide 12, polyamide 610, polyamide 612, polyamide 6I, polyamide 6T, polyamide 4T, polyamide 410, polyamide 510, polyamide 1010, polyamide 1012, polyamide 10T, polyamide 1212, polyamide 12T, polyamide MXD6, or a combination thereof.

In one embodiment, the polyamide resin may include polyamide 6.

In one embodiment, the polyamide resin may be present in an amount of 30 wt% to 70 wt%, for example, 40 wt% to 70 wt%, for example, 45 wt% to 70 wt%, based on the total weight of the base material.

When the content of the polyamide resin falls within this range, the thermoplastic resin composition and a molded product formed thereof can have good mechanical properties attributable to the polyamide resin.

### (B) Phosphorus flame retardant

In one embodiment, the phosphorus flame retardant allows the thermoplastic resin composition to have a higher level of flame retardancy by reinforcing flame retardancy of the thermoplastic resin in cooperation with the melamine flame retardant.

In one embodiment, the phosphorus flame retardant may include a typical phosphorus flame retardant used to enhance flame retardancy of thermoplastic resin compositions. For example, the phosphorus flame retardant may include a phosphate compound, a phosphonate compound, a phosphinate compound, a phosphine oxide compound, a phosphazene compound, and metal salts thereof. These may be used alone or as a mixture thereof.

Specifically, the phosphorus flame retardant may include aluminum diethyl phosphinate, triphenyl phosphate, ammonium polyphosphate, resorcinol-di(bis-2,6-dimethylphenyl)phosphate, bisphenol A diphenyl phosphate, cyclophosphazene, diethyl phosphinate ammonium salt, or combination thereof.

In one embodiment, the phosphorus flame retardant may be aluminum diethyl phosphinate.

The phosphorus flame retardant may be present in an amount of 5 wt% to 30 wt%, for example, 10 wt% to 30 wt%, for example, 10 wt% to 20 wt%, for example, 10 wt% to 15 wt%, based on the total weight of the base material. Within this range, the thermoplastic resin composition can have good flame retardancy while exhibiting good mechanical properties and moldability.

### (C) Melamine flame retardant

In one embodiment, the melamine flame retardant allows the thermoplastic resin composition to have a higher level of flame retardancy by reinforcing flame retardancy of the thermoplastic resin in cooperation with the phosphorus flame retardant.

In one embodiment, the melamine flame retardant may include a typical melamine flame retardant used to enhance flame retardancy of thermoplastic resin compositions.

Specifically, the melamine flame retardant may include melamine polyphosphate, melamine/ammonium polyphosphate, melamine phosphate, melamine pyrophosphate, or a combination thereof.

In one embodiment, the melamine flame retardant may be melamine polyphosphate.

The melamine flame retardant may be present in an amount of 1 wt% to 10 wt%, for example, 4 wt% to 10 wt%, for example, 4 wt% to 6 wt%, based on the total weight of the base material. Within this range, the thermoplastic resin composition can have good flame retardancy while exhibiting good mechanical properties and moldability.

### (D) Glass fibers

In one embodiment, the glass fibers not only improve mechanical properties of the thermoplastic resin composition, such as tensile strength, but also can serve to enhance flame retardancy of the thermoplastic resin composition.

In one embodiment, the glass fibers may include typical glass fibers used in thermoplastic resin compositions.

The glass fibers may have a diameter of about 1 µm to about 20 µm, for example, about 1 µm to about 15 µm, for example, about 1 µm to about 10 µm, for example, about 1 µm to about 5 µm, without being limited thereto.

The glass fibers may have an average length of about 10 mm or less, for example, about 1 mm to 8 mm, for example, about 1 mm to about 5 mm, for example, about 1 to about 3 mm, without being limited thereto.

When the diameter and length of the glass fibers fall within these ranges, the thermoplastic resin composition can have good mechanical properties.

The glass fibers may have a circular cross-section, an elliptical cross-section, a rectangular cross-section, or a dumbbell-like cross-section composed of two circles connected to each other. In one embodiment, the glass fibers may be a mixture of two or more different types of glass fibers which are different from one another in terms of cross-section, diameter, length, and the like.

In order to improve adhesion of the glass fibers to a thermoplastic resin, the glass fibers may be subjected to surface treatment with a specific material. Properties of the thermoplastic resin composition, such as fluidity and impact strength, may depend on the type of surface treatment agent used.

Although the surface treatment agent may include a silane compound, an epoxy compound, and a urethane compound, the present invention is not limited thereto and the surface treatment agent may include any typical commercially available surface treatment agent.

In one embodiment, the glass fibers may be present in an amount of 20 wt% to 40 wt%, for example, 30 wt% to 40 wt%, for example, 30 wt% to 35 wt%, based on the total weight of the base material. Within this range, the thermoplastic resin composition and a molded product formed thereof can exhibit good mechanical properties.

### (E) Zinc borate

In one embodiment, the zinc borate allows the thermoplastic resin composition to have good properties in terms of flame retardancy and electrical insulation in cooperation with the fluorinated polyolefin described below.

The zinc borate may be present in an amount of 0.5 parts by weight to 5 parts by weight, for example, 0.5 parts by weight to 1 part by weight, relative to 100 parts by weight of the thermoplastic resin composition. Within this range, the thermoplastic resin composition including zinc borate and a molded product formed thereof can have good properties in terms of flame retardancy and electrical insulation.

### (F) Fluorinated polyolefin

In one embodiment, the fluorinated polyolefin allows the thermoplastic resin composition to have good properties in terms of flame retardancy and electrical insulation in cooperation with the zinc borate.

The fluorinated polyolefin may be one of a polytetrafluoroethylene resin, a polyfluoroethylene resin, a polyfluoropropylene resin, a polyfluorobutylene resin, a polyvinylidene fluoride resin, a tetrafluoroethylene-vinylidene fluoride copolymer, a tetrafluoroethylene-hexafluoropropylene copolymer, an ethylene-tetrafluoroethylene copolymer, or a combination thereof. These may be used independently of each other, or may be used as a mixture thereof.

In one embodiment, the fluorinated polyolefin may be present in an amount of 0.5 parts by weight to 3 parts by weight, for example, 1 part by weight to 3 parts by weight, relative to 100 parts by weight of the base material. Within this range, the thermoplastic resin composition and a molded product formed thereof can exhibit good properties in terms of flame retardancy and electrical insulation.

A weight ratio of the zinc borate (E) to the fluorinated polyolefin (F) may range from 1:2 to 1:10, for example, 1:2 to 1:6, for example, 1:3 to 1:6. Within this range of weight ratio of the zinc borate (E) to the fluorinated polyolefin (F), the thermoplastic resin composition can have good properties in terms of flame retardancy and electrical insulation while retaining good mechanical properties.

### (G) Additive

In one embodiment, in addition to the aforementioned components (A) to (F), the thermoplastic resin composition may further include one or more additives that are needed to achieve balance between properties of the thermoplastic resin composition such that the thermoplastic resin composition can have good flame retardancy, electrical insulation, and mechanical properties without deterioration in other properties, or are needed to meet end-use requirements of the thermoplastic resin composition.

Specifically, the additives may include an antimicrobial agent, a nucleating agent, a coupling agent, fillers, a plasticizer, a lubricant, a release agent, a heat stabilizer, an antioxidant, a UV stabilizer, a pigment, a dye, and the like. These may be used alone or in combination thereof.

The additives may be present in an appropriated amount in the thermoplastic resin composition without altering the desired properties of the thermoplastic resin composition. For example, the additives may be present in an amount of 20 parts by weight or less relative to 100 parts by weight of the base material, without being limited thereto.

The thermoplastic resin composition according to the present invention may be used in the form of a blend with other resins or other rubber components.

Another aspect of the present invention provides a molded product formed of the thermoplastic resin composition according to the present invention. The molded product may be manufactured using the thermoplastic resin composition by various methods known in the art, such as injection molding and extrusion molding.

The molded product may have a comparative tracking index (CTI) of at least 650 V, as measured in accordance with ASTM D3638.

The molded product may have a flame retardancy of at least V-0, as measured in accordance with UL94.

The molded product may have a tensile elongation at break of at least 3.0%, at least 3. 1%, at least 3.2%, or at least 3.3%, as measured in accordance with ASTM D638.

The molded product may have a flexural modulus of at least 105,000 kgf/cm², at least 106,000 kgf/cm², or at least 107,000 kgf/cm², as measured in accordance with ASTM D790.

Next, the present invention will be described in more detail with reference to some examples. It should be understood that these examples are provided for illustration only and are not to be construed in any way as limiting the present invention.

### Examples 1 and 2 and Comparative Examples 1 to 8

In Examples 1 and 2 and Comparative Examples 1 to 8, thermoplastic resin compositions were prepared in the content ratios as listed in Table 1.

Specifically, the components listed in Table 1 were mixed and then introduced into a feeder (barrel temperature: about 260°C) of a twin screw extruder (L/D=44, Φ=35 mm) in a quantitative and continuous manner, followed by kneading and extrusion, thereby preparing a thermoplastic resin composition in pellet form. Thereafter, the prepared thermoplastic resin composition was dried at about 80°C for about 2 hours and then subjected to injection molding using a 6 oz. injection molding machine at a cylinder temperature of about 250°C and a mold temperature of about 60°C, thereby preparing a specimen for evaluation of properties of the thermoplastic resin composition. The evaluated properties of the thermoplastic resin composition are shown in Table 2.

In Table 1, the contents of components (A), (B), (C), and (D) are each represented in percent by weight based on the total weight of (A), (B), (C) and (D), and the contents of components (E) and (F) are each represented in parts by weight relative to the total parts by weight of (A), (B), (C) and (D).

**Table 1**

| Item | Example 1 | Example 2 | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|---|
| (A) | 47 | 47 | 47 | 48 | 47 | 47 | 47 | 47 | 47 | 65 |
| (B) | 13 | 13 | 13 | 16 | 13 | 13 | 13 | 13 | 13 | - |
| (C) | 5 | 5 | 5 | 6 | 5 | 5 | 5 | 5 | 5 | - |
| (D) | 35 | 35 | 35 | 30 | 35 | 35 | 35 | 35 | 35 | 35 |
| (E) | 0.5 | 1 | 0.5 | - | - | 10 | 1 | 5 | 5 | - |
| (F) | 3 | 3 | 0.5 | - | - | 0.5 | 0.5 | 0.5 | 3 | - |

Details of the components listed in Table 1 are as follows:

### (A) Polyamide resin

A polyamide 6 resin prepared from caprolactam (product name: EN 300, manufacturer: KP Chemtech Co., Ltd.) was used.

### (B) Phosphorus flame retardant

Aluminum diethylphosphinate having a phosphorus content of about 23 wt% (product name: FR-133L, manufacturer: Chempia Co., Ltd.) was used.

### (C) Melamine flame retardant

Melamine polyphosphate having a nitrogen content of about 42 wt% (product name: MPP-D, manufacturer: Chempia Co., Ltd.) was used.

### (D) Glass fibers

Glass fibers having a circular cross-section, a diameter of about 10 µm, and an average length of about 3 mm and subjected to surface treatment with a urethane compound (product name: ECS03T-251H, manufacturer: NEG Co., Ltd.) were used.

### (E) Zinc borate

Zinc borate (product name: Firebrake 500, manufacturer: U.S. Borax, Inc.) was used.

### (F) Fluorinated polyolefin

Polytetrafluoroethylene (product name: 800J, manufacturer: DuPont Inc.) was used.

### Property evaluation

Experimental results are shown in Table 2.

### (1) Impact strength (unit: kgf·cm/cm)

Izod impact strength was measured on a 1/8" thick notched specimen in accordance with ASTM D256.

### (2) Tensile strength (unit: kgf/cm²)

Tensile strength was measured on a 3.2 mm thick specimen at a tensile rate of 5 mm/min in accordance with ASTM D638.

### (3) Tensile elongation at break (unit: %)

Tensile elongation at break was measured on a 3.2 mm thick specimen at a tensile rate of 5 mm/min in accordance with ASTM D638.

### (4) Flexural modulus (unit: kgf/cm²)

Flexural modulus was measured on a 6.4 mm thick specimen in accordance with ASTM D790.

### (5) Flame retardancy (UL94 grade)

Flame retardancy was measured on a 0.75 mm thick specimen by UL94 vertical burning test.

### (6) Electrical insulation (unit: V)

Electrical insulation was measured on a 3.0 mm thick specimen in accordance with ASTM D3638. Specifically, 50 drops of an aqueous solution of NH4Cl at a concentration of 0.1 wt% were applied to a surface of the specimen at a rate of 1 drop per 30 seconds and a voltage at which there was no carbonization of the specimen was measured and then expressed as a comparative tracking index (CTI). A higher CTI indicates better electrical insulation.

**Table 2**

| Item | Example 1 | Example 2 | Comp. Example 1 | Comp. Example 2 | Comp. Example 3 | Comp. Example 4 | Comp. Example 5 | Comp. Example 6 | Comp. Example 7 | Comp. Example 8 |
|---|---|---|---|---|---|---|---|---|---|---|
| Impact strength | 9.1 | 9.2 | 9.4 | 8.0 | 8.7 | 5.3 | 9.7 | 9.4 | 100 | 8.0 |
| Tensile strength | 1,630 | 1,620 | 1,580 | 1,330 | 1,600 | 1,800 | 1,590 | 1,670 | 1,630 | 1,450 |
| Tensile elongation at break | 3.3 | 3.5 | 3.4 | 2.7 | 3.4 | 2.8 | 2.9 | 2.7 | 3.5 | 3.0 |
| Flexural modulus | 106,000 | 105,000 | 104,000 | 97,200 | 103,000 | 108,700 | 104,000 | 106,000 | 101,000 | 95,000 |
| Flame retardancy grade | V-0 | V-0 | V-0 | V-0 | V-0 | V-0 | V-0 | V-0 | V-0 | Fail |
| CTI | 650 or greater | 650 or greater | 600 | 550 | 550 | 650 or greater | 650 or greater | 650 or greater | 650 or greater | 500 or less |

From Tables 1 and 2, it could be seen that the thermoplastic resin compositions of Examples had good mechanical properties (impact strength, elongation at break, and flexural modulus), as compared with the thermoplastic resin compositions of Comparative Examples, while exhibiting good properties in terms of both flame retardancy and electrical insulation. Although example embodiments of the invention have been described in detail above, it should be understood that the scope of the invention is not limited thereto and that various modifications and alterations can be made by those skilled in the art without departing from the spirit and scope of the invention. The accompanying claims and equivalents thereto are intended to cover such modifications and alterations as would fall within the scope of the invention.

## Claims

1. A thermoplastic resin composition comprising:
100 parts by weight of a base material comprising 30 wt% to 70 wt% of a polyamide resin (A), 5 wt% to 30 wt% of a phosphorus flame retardant (B), 1 wt% to 10 wt% of a melamine flame retardant (C), and 20 wt% to 40 wt% of glass fibers (D);
0.5 parts by weight to 5 parts by weight of zinc borate (E); and
0.5 parts by weight to 3 parts by weight of fluorinated polyolefin (F),
wherein a weight ratio of the zinc borate (E) to the fluorinated polyolefin (F) ranges from 1:2 to 1:10.

2. The thermoplastic resin composition as claimed in claim 1, wherein the polyamide resin (A) comprises polyamide 6, polyamide 66, polyamide 46, polyamide 11, polyamide 12, polyamide 610, polyamide 612, polyamide 6I, polyamide 6T, polyamide 4T, polyamide 410, polyamide 510, polyamide 1010, polyamide 1012, polyamide 10T, polyamide 1212, polyamide 12T, polyamide MXD6, or a combination thereof.

3. The thermoplastic resin composition as claimed in claim 1 or 2, wherein the polyamide resin (A) is polyamide 6.

4. The thermoplastic resin composition as claimed in any one of claims 1 to 3, wherein the phosphorus flame retardant (B) is one of aluminum diethyl phosphinate, triphenyl phosphate, ammonium polyphosphate, resorcinol-di(bis-2,6-dimethylphenyl)phosphate, bisphenol A diphenyl phosphate, cyclophosphazene, diethyl phosphinate ammonium salt, or a combination thereof.

5. The thermoplastic resin composition as claimed in claim 4, wherein the phosphorus flame retardant (B) is aluminum diethyl phosphinate.

6. The thermoplastic resin composition as claimed in any one of claims 1 to 5, wherein the melamine flame retardant (C) is one of melamine polyphosphate, melamine/ammonium polyphosphate, melamine phosphate, melamine pyrophosphate, or a combination thereof.

7. The thermoplastic resin composition as claimed in claim 6, wherein the melamine flame retardant (C) is melamine polyphosphate.

8. The thermoplastic resin composition as claimed in any one of claims 1 to 7, wherein the fluorinated polyolefin (F) is one of a polytetrafluoroethylene resin, a polyfluoroethylene resin, a polyfluoropropylene resin, a polyfluorobutylene resin, a polyvinylidene fluoride resin, a tetrafluoroethylene-vinylidene fluoride copolymer, a tetrafluoroethylene-hexafluoropropylene copolymer, an ethylene-tetrafluoroethylene copolymer, or a combination thereof.

9. The thermoplastic resin composition as claimed in claim 8, wherein the fluorinated polyolefin (F) is a polytetrafluoroethylene resin.

10. The thermoplastic resin composition as claimed in any one of claims 1 to 9, wherein a weight ratio of the zinc borate (E) to the fluorinated polyolefin (F) ranges from 1:3 to 1:6.

11. A molded product formed of the thermoplastic resin composition as claimed in any one of claims 1 to 10.

12. The molded product according to claim 11, wherein the molded product has a comparative tracking index (CTI) of at least 650 V, as measured in accordance with ASTM D3638.

13. The molded product according to claim 11, wherein the molded product has a flame retardancy of at least V-0, as measured in accordance with UL94.

14. The molded product according to claim 11, wherein the molded product has a tensile elongation at break of at least 3.0%, as measured in accordance with ASTM D638.

15. The molded product according to claim 11, wherein the molded product has a flexural modulus of at least 105,000 kgf/cm², as measured in accordance with ASTM D790.
